# EUROPÄISCHE PATENTANMELDUNG

(11) **EP 3 151 082 A1**
(43) Veröffentlichungstag der Anmeldung: **05.04.2017**
(21) Anmeldenummer: 16187470.6
(22) Anmeldetag: 06.09.2016
(51) Int. Cl.: G05G 1/30, B60K 23/02

(54) **PEDAL SOWIE KRAFTFAHRZEUG**

(30) Priorität: 30.09.2015 DE 102015218956
(71) Anmelder: ZF Friedrichshafen AG, 88046 Friedrichshafen (DE)
(72) Erfinder: Tulaczko, Boleslaw, 97453 Schonungen (DE)

(57) **Zusammenfassung**

Die Erfindung betrifft ein Pedalanordnung für ein Kraftfahrzeug mit einem Pedal und einer Lasteinrichtung, wobei die Lasteinrichtung zur Erzeugung einer mit dem Pedalweg veränderlichen Lastkennlinie eine Kraftspeicheranordnung und eine mit der Kraftspeicheranordnung zusammenwirkende Profilbahn aufweist, dadurch gekennzeichnet, dass die Kraftspeicheranordnung wenigstens eine Schenkelfeder umfasst.

## Beschreibung

Die Erfindung betrifft eine Pedalanordnung für ein Kraftfahrzeug mit einem Pedal und einer Lasteinrichtung, wobei die Lasteinrichtung zur Erzeugung einer mit dem Pedalweg veränderlichen Lastkennlinie eine Kraftspeicheranordnung und eine mit der Kraftspeicheranordnung zusammenwirkende Profilbahn aufweist.

Pedale dienen in Kraftfahrzeugen u.a. der Betätigung von Bremsen und der Kupplung. Kupplungspedale können dabei mit einer hydraulischen Übertragungsstrecke zusammenwirken, wodurch eine Lastkennlinie erreicht wird. Diese Lastkennlinie ist dabei auch immer an Wunschkennlinien anzupassen, sodass unabhängig vom dahinterliegenden Betätigungssystem das Kupplungspedal auf eine vom Benutzer erwartete Art und Weise zu betätigen ist.

Weiterhin sind elektrische Pedale bekannt, bei denen ein Sensor die Pedalposition abgreift und diese an eine Steurungseinrichtung übermittelt. Grundsätzlich haben derartige Pedale überhaupt keine Last mehr gegen sich, weswegen hier eine Lasteinrichtung vorzusehen ist, um wiederum eine vorgegebene Lastkennlinie zu erreichen.

Aus der EP 1 722 119 B1 geht Pedalanordnung hervor, bei der die Lasteinrichtung ein Profilelement und zwei Schraubenfedern aufweist. Die Schraubenfedern erzeugen zusammen mit dem Profilelement eine wegabhängige Lastkennlinie.

Ausgehend hiervon ist es Aufgabe der vorliegenden Anmeldung, eine Pedalanordnung mit einer Lasteinrichtung anzugeben, die vereinfacht aufgebaut ist und die sowohl in Pedalanordnungen mit nachgeschalteter Betätigungseinrichtung als auch in Pedalen mit Sensoreinrichtung eingesetzt werden kann.

Zur Lösung dieser Aufgabe ist eine Pedalanordnung der eingangs genannten Art vorgesehen, die sich dadurch auszeichnet, dass die Kraftspeicheranordnung wenigstens eine Schenkelfeder umfasst.

Als Kern der Erfindung wird gesehen, einen neuen Federtyp einzusetzen. Die Schenkelfeder erlaubt in der Pedalanordnung eine vereinfachte Montage. Dabei können mittels der Schenkelfeder oder Schenkelfedern dieselben Kraftwirkungen dargestellt werden wie mittels zweier Schrasubenfedern, die sich jeweils außen an einem Gehäuse abstützen.

Vorteilhafterweise kann die Lasteinrichtung zwei Schenkelfedern aufweisen. Statt der bekannten zwei Schraubenfedern können dabei zwei Schenkelfedern zum Einsatz kommen. Dies weist den Vorteil auf, dass die Schenkelfedern unterschiedlich abgestimmt werden können.

Mit besonderem Vorteil sind die Schenkelfedern an der gleichen Stelle am Gehäuse gelagert, beispielsweise an einem Zapfen des Gehäuses. Dann weisen die Schenkelfedern dieselbe Drehachse auf, allerdings verläuft die Drehung in eine entgegengesetzte Drehrichtung.

Dabei kann sich bevorzugt die Profilbahn auf zwei Seiten eines Profilelementes erstrecken und eine Schenkelfeder jeweils mit einer Seite des Profilelementes zusammenwirken. Damit lassen sich auf den Seiten des Profilelementes auch unterschiedliche Profilbahnen vorsehen. Bevorzugt ist jedoch, dass die Profilbahnen symmetrisch zur Längsachse des Profilelementes verlaufen. Dementsprechend wirkt jeweils die gleiche Kontur bzw. das gleiche Profil mit einem Ende einer Schenkelfeder zusammen, lediglich die Richtung ist entgegengesetzt.

Die anderen Enden der Schenkelfedern, die nicht mit den Profilbahnen zusammenwirken, sind in einer ersten Alternative mit einem Ende am Gehäuse abgestützt. Dies erlaubt eine einfache Montage der Federn.

In einer zweiten Alternative können sich die Schenkelfedern mit einem Ende gegenseitig abstützen. D.h. dass die freien Enden der Schenkelfedern sich gegenseitig stützen. Dabei kann zwar auf eine Stützstelle am Gehäuse verzichtet werden, jedoch sind die Federenden zu führen, sodass die Kraftwirkung der Federenden nicht aneinander vorbeiläuft. Aufgrund des dabei entstehenden Montageaufwandes ist die erste Alternative besonders bevorzugt.

Wie bereits beschrieben können die Schenkelfedern dieselbe Drehachse aufweisen. Sie können sich aber auch nur in derselben Ebene drehen, wobei die Drehachsen gegeneinander verschoben sind. Dies ist dann der Fall, wenn die Schenkelfedern an unterschiedlichen Stellen bspw. des Gehäuses gelagert sind.

Bevorzugt findet die Lagerung der Schenkelfeder oder der Schenkelfeldern am Gehäuse statt. Dementsprechend ist dann das Profilelement mit dem Pedal verbunden, sodass über die Pedalbewegung eine Lastkennlinie erhalten wird, die von den Profilbahnen des Profilelementes abhängt. Dieselbe Lastkennlinie erhält man allerdings auch, wenn das Profilelement am Gehäuse befestigt ist und die Schenkelfeder oder die Schenkelfedern am Pedal. Da die Lagerung der Schenkelfeder oder der Schenkelfedern am Gehäuse aber mit der geringsten Toleranz möglich ist, ist diese Art der Anordnung wie beschrieben bevorzugt.

Vorteilhafterweise kann die Pedalanordnung einen Sensor zur Erkennung der Pedalposition aufweisen. Wie beschrieben ist die Verwendung der beschriebenen Lasteinrichtung insbesondere auch für sogenannte elektrische Pedale sinnvoll.

Vorteilhafterweise kann die Pedalanordnung als Kupplungspedalanordnung ausgebildet sein. Grundsätzlich lassen sich auch die Bremse und das Gaspedal elektrisch ausbilden.

Daneben betrifft die Erfindung ein Kraftfahrzeug mit wenigstens einer Pedalanordnung. Das Kraftfahrzeug zeichnet sich dadurch aus, dass die Pedalanordnung wie beschrieben ausgebildet ist.

Vorteilhafterweise besitzt das Kraftfahrzeug eine Steuerungseinrichtung zur Verarbeitung von Signalen über die Pedalposition. Dies ist wie beschrieben bei sogenannten elektrischen Pedalanordnungen notwendig.

Weiterhin kann das Kraftfahrzeug ein Kupplungsaktuator zur Betätigung der Kupplung aufweisen. Auch dies ist im Falle einer elektrischen Pedalanordnung notwendig, da über das Pedal selbst keinerlei Kraft mehr übertragen wird.

Wie eingangs bereits beschrieben ist das Vorsehen der Lasteinrichtung aber nicht nur bei elektrischen Pedalanordnungenen sinnvoll. Vielmehr lässt sich mit der beschriebenen Lasteinrichtung auch die Lastkennlinie herkömmlicher Pedale auf einfache Art und Weise modifizieren, sodass eine Anpassung von Lastkennlinien an Wunschkennlinien auf einfache Art und Weise ermöglicht wird.

Weitere Vorteile, Merkmale und Einzelheiten der Erfindung ergeben sich aus der folgenden Beschreibung von Ausführungsbeispielen und Zeichnungen. Dabei zeigen:
Fig. 1 eine Pedalanordnung (Stand der Technik),
Fig. 2 eine Lasteinrichtung in einer ersten Ausgestaltung,
Fig. 3 eine Lasteinrichtung in einer zweiten Ausgestaltung, und
Fig. 4 eine Lasteinrichtung in einer dritten Ausgestaltung.

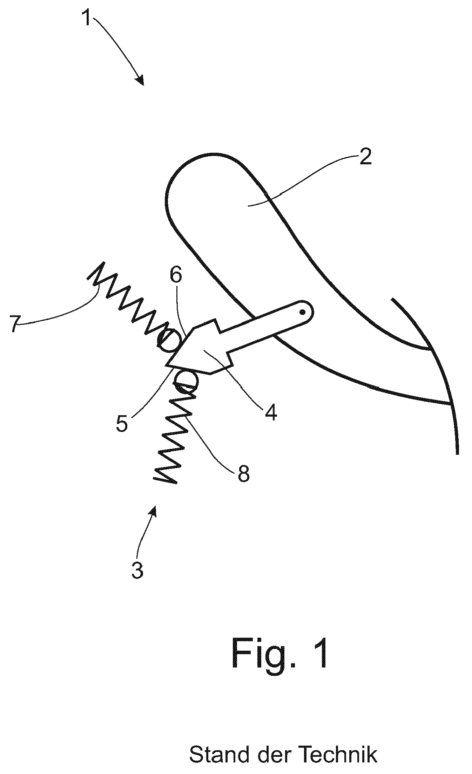

Fig. 1 zeigt eine bekannte Pedalanordnung 1 mit einem Pedal 2 und einer Lasteinrichtung 3. Bekannte Lasteinrichtungen 3 umfassen ein Profilelement 4 mit Profilbahnen 5 und 6 sowie mit diesen zusammenwirkenden Schraubenfedern 7 und 8.

Bei dieser Anordnung ist die Montage der Federn aufwendig.

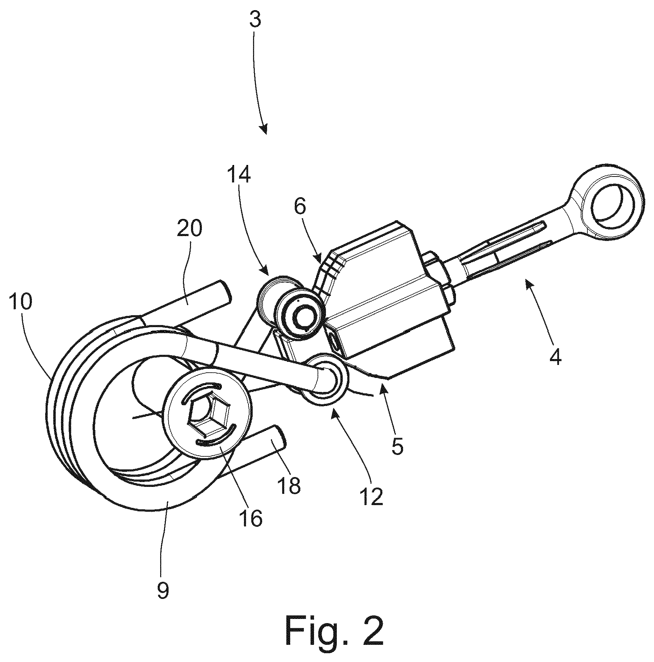

Fig. 2. zeigt eine Ausgestaltung einer Lasteinrichtung 3, die vereinfacht zu montieren ist. Dabei sind zwei Schenkelfedern 9 und 10 vorgesehen, wobei jeweils ein Ende 12 und 14 der Schenkelfedern 9 und 10 mit einer Profilbahn 5 und 6 zusammenwirkt zur Erzeugung einer Lastkennlinie. Die Lastkennlinie hängt insbesondere davon ab, was einem Benutzer präsentiert werden soll. Die dargestellte Kulisse ist also rein exemplarisch und keinesfalls zwingend. Die Schenkelfedern 9 und 10 sind über einen Niet 16 am Gehäuse gelagert und die freien Enden 18 und 20 sind am Gehäuse abgestützt, auch wenn dies nicht dargestellt ist. Dabei ist ein Teil der Pedalanordnung 1 und die Lasteinrichtung 3 in einem Gehäuse angeordnet, welches ohne Lasteinrichtung nicht unbedingt notwendig ist. Das in der vorliegenden Anmeldung angesprochene Gehäuse ist also ein Gehäuse der Pedalanordnung 1.

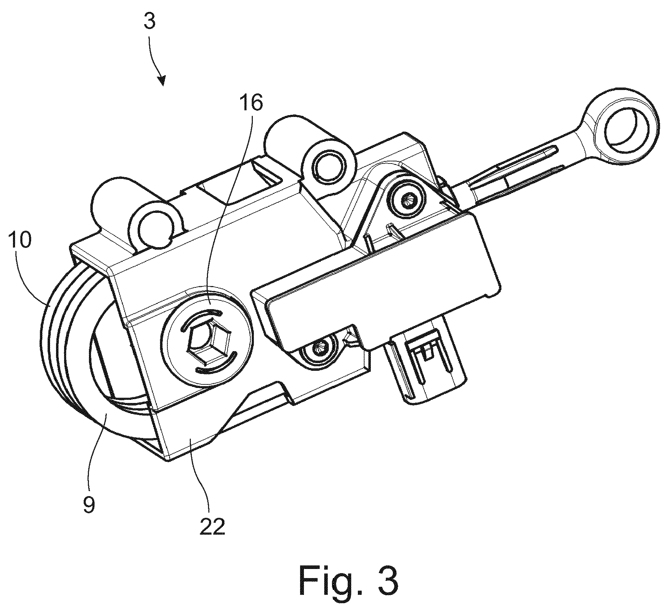

Zur Verdeutlichung ist in Fig. 3 die Lasteinrichtung 3 mit einem entsprechenden Gehäuse 22 dargestellt. An dem Gehäuse 22 sind die Enden 18 und 20 abgestützt. Weiterhin sind über das Gehäuse 22 mittels des Niets 16 die Schenkelfedern 9 und 10 gelagert.

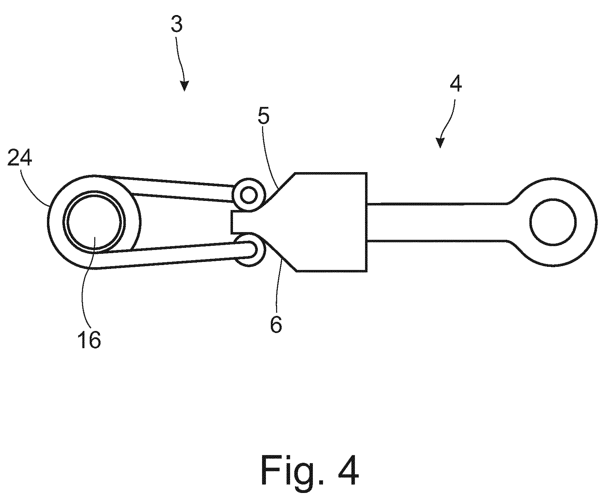

Fig. 4 zeigt eine alternative Ausgestaltung einer Lasteinrichtung 3 mit lediglich einer Schenkelfeder 24. Auch die Schenkelfeder 24 kann am Gehäuse 22 gelagert werden. Dabei ist neben einem Niet 16 selbstverständlich auch das Vorsehen von Zapfen oder anderen Lagerungselementen möglich.

Wie aus Fig. 1 hervorgeht ist bevorzugt vorgesehen, dass das Profilelement 4 mit dem Pedal verbunden ist, während die Schenkelfedern 9 und 10 oder die Schenkelfeder 24 am Gehäuse insbesondere dem Gehäuse 22, abgestützt sind. Alternativ ist es auch möglich, die Schenkelfedern 9 und 10 oder die Schenkelfeder 24 am Pedal 2 zu lagern.

### Bezugszeichen

- 1: Pedalanordnung
- 2: Pedal
- 3: Lasteinrichtung
- 4: Profilelement
- 5: Profilbahn
- 6: Profilbahn
- 7: Schraubenfeder
- 8: Schraubenfeder
- 9: Schenkelfeder
- 10: Schenkelfeder
- 12: Ende
- 14: Ende
- 16: Niet
- 18: Ende
- 20: Ende
- 22: Gehäuse
- 24: Schenkelfeder

## Patentansprüche

1. Pedalanordnung (1) für ein Kraftfahrzeug mit einem Pedal (2) und einer Lasteinrichtung (3), wobei die Lasteinrichtung (3) zur Erzeugung einer mit dem Pedalweg veränderlichen Lastkennlinie eine Kraftspeicheranordnung und ein mit der Kraftspeicheranordnung zusammenwirkendes Profilelement (4) aufweist, **dadurch gekennzeichnet, dass** die Kraftspeicheranordnung wenigstens eine Schenkelfeder (9, 10, 24) umfasst.

2. Pedalanordnung nach Anspruch 1, **dadurch gekennzeichnet, dass** die Lasteinrichtung (3) zwei Schenkelfedern (9, 10) aufweist.

3. Pedalanordnung nach Anspruch 2, **dadurch gekennzeichnet, dass** das Profilelement (4) zwei Profilbahnen (5, 6) aufweist, die sich auf zwei Seiten eines Profilelementes (4) erstrecken und eine Schenkelfeder (9, 10) jeweils mit einer Profilbahn (5, 6) zusammenwirkt.

4. Pedalanordnung nach einem der Ansprüche 2 oder 3, **dadurch gekennzeichnet, dass** die Schenkelfedern (9, 10) mit einem Ende an einem Gehäuse (22) der Pedalanordnung (1) abgestützt sind.

5. Pedalanordnung nach einem der Ansprüche 2 oder 3, **dadurch gekennzeichnet, dass** sich die Schenkelfedern (9, 10) mit einem Ende gegenseitig abstützen.

6. Pedalanordnung nach einem der Ansprüche 2 bis 5, **dadurch gekennzeichnet, dass** die Kraftwirkung der Schenkelfedern (9, 10) im Wesentlichen in entgegengesetzter Richtung wirkt.

7. Pedalanordnung nach einem der Ansprüche 2 bis 6, **dadurch gekennzeichnet, dass** die Schenkelfedern (9, 10) dieselbe Drehachse aufweisen.

8. Pedalanordnung nach einem der Ansprüche 2 bis 7, **dadurch gekennzeichnet, dass** die Schenkelfedern (9, 10) eine entgegengesetzte Drehrichtung aufweisen.

9. Pedalanordnung nach einem der vorangehenden Ansprüche, **dadurch gekennzeichnet, dass** die Pedalanordnung (1) einen Sensor zur Erkennung der Pedalposition aufweist.

10. Pedalanordnung nach einem der vorangehenden Ansprüche, **dadurch gekennzeichnet, dass** das Pedal als Kupplungspedal ausgebildet ist.

11. Kraftfahrzeug mit wenigstens einer Pedalanordnung, **dadurch gekennzeichnet, dass** die Pedalanordnung nach einem der vorangehenden Ansprüche ausgebildet ist.

12. Kraftfahrzeug nach Anspruch 11, **dadurch gekennzeichnet, dass** das Kraftfahrzeug eine Steuerungseinrichtung zur Verarbeitung von Signalen über die Pedalposition aufweist.

13. Kraftfahrzeug nach Anspruch 11 oder 12, **dadurch gekennzeichnet, dass** das Kraftfahrzeug einen Kupplungsaktuator zur Betätigung der Kupplung aufweist.
